# EUROPÄISCHE PATENTSCHRIFT

(11) **EP 4 156 425 B1**
(45) Veröffentlichungstag und Bekanntmachung des Hinweises auf die Patenterteilung: **10.12.2025**
(21) Anmeldenummer: 22191465.8
(22) Anmeldetag: 22.08.2022
(51) Int. Cl.: H02G 3/06, H02G 3/04, H02G 3/34, B60R 16/02

(54) **KABELKANAL**
CABLE CHANNEL
CHEMIN DE CÂBLES

(30) Priorität: 24.09.2021 DE 102021124737
(43) Veröffentlichungstag der Anmeldung: 29.03.2023
(73) Patentinhaber: Deere & Company, Moline, IL 61265 (US)
(72) Erfinder: HOEPPNER, ULF, 68163 Mannheim (DE)
(74) Vertreter: Dehnhardt, Florian Christopher

(56) Entgegenhaltungen:
- EP-B1- 1 675 231
- EP-B1- 2 725 670
- WO-A1-2020/076860
- WO-A2-2012/011982
- US-A- 3 951 439
- US-A1- 2009 314 541
- US-A1- 2016 248 235
- US-A1- 2020 277 739
- US-B1- 6 216 746

## Beschreibung

Die Erfindung betrifft einen Kabelkanal zur Aufnahme mindestens eines Kabels.

Im Fahrzeugbau werden Kabelkanäle verwendet, um beispielsweise elektrische Leitungen oder Leitungsbündel in einer Soll-Position zu fixieren und in dieser Soll-Position vor etwaigen Beschädigungen zu schützen. Dabei muss der Kabelkanal an eine spezifische Ausgestaltung des Kabels oder Kabelsatzes angepasst werden, was verhältnismäßig kostenaufwändig ist.

Der vorliegenden Erfindung liegt die Aufgabe zugrunde, einen Kabelkanal bereitzustellen, der auf wirtschaftliche Weise zur Aufnahme von Kabeln geeignet ist.

Diese Aufgabe wird durch einen Kabelkanal mit den Merkmalen des Patentanspruchs 1 gelöst.

Somit kann eine beliebige Anzahl von Kabelgehäusen in einer geometrisch strukturierten Weise miteinander lösbar verbunden werden. Dies ermöglicht eine variable und somit kostengünstige Anpassung des Kabelkanals an die spezifische Ausgestaltung und die spezifischen Erfordernisse (z.B. vorbestimmter Verlauf an einem Fahrzeug) des jeweiligen Kabels. Vorzugsweise sind die Kabelgehäuse hinsichtlich wesentlicher geometrischer und funktioneller Merkmale ähnlich oder identisch ausgebildet, wodurch mit einem einzigen Typ eines Kabelgehäuses unterschiedliche Kabelkanäle kostengünstig bereitgestellt werden können.

Der vorgenannte einzige Typ eines Kabelgehäuses bedeutet insbesondere, dass alle verwendeten Kabelgehäuse identisch aufgebaut sind, wodurch eine wirtschaftliche Fertigung unterschiedlicher Kabelkanäle unterstützt wird.

Insgesamt ist der Kabelkanal mit seinen Kabelgehäusen modular bzw. baukastenartig aufgebaut und kann hierdurch montagetechnisch einfach und kostengünstig an unterschiedliche Design-Anforderungen des Kabels angepasst werden. Eine Bereitstellung unterschiedlich vorgefertigter Kabelkanäle entsprechend der unterschiedlichen Kabelvarianten hinsichtlich Verlauf und Ausgestaltung ist folglich überflüssig.

Die lösbare Verbindung zwischen dem Verbindungsanschluss und einem korrespondierenden Gegenanschluss ist beispielsweise als eine Rastverbindung und/oder eine formschlüssige Verbindung ausgebildet.

Der Begriff "Kabel" steht hier stellvertretend für ein einzelnes Kabel oder mehrere Kabel. Letztere sind vorzugsweise als ein gemeinsames Kabelbündel oder ein Kabelsatz ausgestaltet. Das Kabel repräsentiert vorzugsweise eine oder mehrere elektrische Leitungen. Es sind jedoch auch andere Leitungen, z.B. hydraulische und/oder pneumatische Leitungen, denkbar.

Der Kabelkanal kann unterschiedliche technische Einsatzgebiete haben. Vorzugsweise wird er in einem Fahrzeug verwendet. Als Fahrzeuge kommen insbesondere landwirtschaftliche Fahrzeuge, forstwirtschaftliche Fahrzeuge und Baumaschinen in Frage.

Weitere vorteilhafte Ausgestaltungen des erfindungsgemäßen Kabelkanals gehen aus den Unteransprüchen hervor.

Vorzugsweise weist das Kabelgehäuse sowohl mindestens einen Verbindungsanschluss als auch den jeweiligen korrespondierenden Gegenanschluss auf. Auf diese Weise wird der modulare Aufbau des Kabelkanals unterstützt.

Vorzugsweise sind der Verbindungsanschluss und der korrespondierende Gegenanschluss miteinander derart lösbar verbunden, das zwei verbundene Kabelgehäuse in Kanallängsrichtung aneinandergereiht sind. Somit kann der Kabelkanal in Kanallängsrichtung bzw. Kabellängsrichtung individuell verlängert werden und folglich kostengünstig an die jeweiligen Gegebenheiten des Kabels angepasst werden.

Für eine montagetechnisch einfache Realisierung der individuellen Verlängerung des Kabelkanals in Kanallängsrichtung sind der Verbindungsanschluss und der korrespondierende Gegenanschluss vorzugsweise an einem kanallängsseitigen Endabschnitt des jeweiligen Kabelgehäuses angeordnet.

In einer bevorzugten Ausführungsform ist der Verbindungsanschluss und/oder der korrespondierende Gegenanschluss des Kabelgehäuses jeweils mit einem Abschlussteil lösbar verbunden. Dieses Abschlussteil ersetzt gewissermaßen das optionale Anschließen eines weiteren Kabelgehäuses. Das Abschlussteil trägt Flankiermittel zur radialen Flankierung eines vom Kabelgehäuse aufgenommenen Kabels. Hierbei erstrecken sich die Flankiermittel zumindest in Kanallängsrichtung und/oder in einer quer zur Kanallängsrichtung verlaufenden Umfangsrichtung. Beispielsweise handelt es sich bei den Flankiermitteln um in Kanallängsrichtung ausgerichtete Flankierstege und/oder einen das Kabel umgebenden Flankierring. Bei der Flankierung des Kabels können die Flankiermittel abhängig von deren geometrischer Ausgestaltung mit radialem Abstand oder ohne radialen Abstand zum Außenmantel des Kabels angeordnet sein. Die Verwendung des Abschlussteiles mit seinen Flankiermitteln ermöglicht eine Fixierung des Kabels an einem Freiende oder Endabschnitt des Kabelgehäuses und gewährleistet hierdurch auf technisch einfache Weise die Aufrechterhaltung einer gewünschten Soll-Position des Kabels.

Erfindungsgemäß sind mindestens einer der vorhandenen Verbindungsanschlüsse und der korrespondierende Gegenanschluss derart ausgebildet und miteinander lösbar verbunden, dass zwei Kabelgehäuse quer zur Kanallängsrichtung aneinandergereiht sind. Somit kann die modulare, variable Erweiterung des Kabelkanals auch quer zur Kanallängsrichtung erfolgen. Hierdurch kann bedarfsweise auch eine Vielzahl von Kabeln strukturiert nebeneinander innerhalb eines einzigen Kabelkanals gelagert werden. Dies wiederum erleichtert die Handhabung der Kabel während der Montage, beispielsweise beim Einbau in ein Fahrzeug.

Erfindungsgemäß wird die lösbare Verbindung durch eine quer zur Kanallängsrichtung zwischen den beiden Kabelgehäusen wirksame Federkraft aufrechterhalten. Hierzu kann an einer Außenseite des Kabelgehäuses mindestens ein Federelement angeordnet sein, welches mit einer Federkraft quer zur Kanallängsrichtung auf das weitere Kabelgehäuse einwirkt.

Für eine montagetechnisch einfache lösbare Verbindung zweier Kabelgehäuse quer zur Kanallängsrichtung ist der Verbindungsanschluss vorzugsweise an einer Außenseite des Kabelgehäuses angeordnet und als ein sich etwa quer zur Kanallängsrichtung erstreckender Ausleger ausgebildet. Dieser Ausleger ist dann mit dem korrespondierenden Gegenanschluss lösbar verbunden, welcher an einer Außenseite des weiteren Kabelgehäuses angeordnet ist. Erfindungsgemäß wird diese lösbare Verbindung durch die vorgenannte Federkraft aufrechterhalten. Durch Aufbringen einer im Vergleich zur Federkraft größeren Gegenkraft kann die lösbare Verbindung gelöst werden.

Weiter bevorzugt weist das Kabelgehäuse zwei miteinander zusammenwirkende Gehäuseschalen auf, welche miteinander lösbar verbunden sind und im verbundenen Zustand einen kanalartigen Hohlraum für das Kabel begrenzen. Die schalenartige Struktur ermöglicht einen einfachen Aufbau und Zusammenbau des Kabelgehäuses. Außerdem unterstützt ein derartiges Kabelgehäuse eine montagetechnisch einfache Handhabung des Kabels während dessen Einbaus in den Kabelkanal.

Vorzugsweise ist eine erste Gehäuseschale des Kabelgehäuses als eine Aufnahmeschale zur Aufnahme des Kabels wirksam. Die zweite Gehäuseschale wirkt dann als eine Deckschale bzw. ein Deckel für einen wirksamen mechanischen Schutz des in die erste Gehäuseschale eingelegten Kabels. Insbesondere weist die als Deckel wirksame Gehäuseschale eine plane Außenseite oder Außenfläche auf. Hierdurch kann der gesamte Kabelkanal eine im Wesentlichen plane Außenseite oder Außenfläche aufweisen, was die montagetechnische Handhabung des Kabelkanals an einem Einbaubereich (z.B. in einem Fahrzeug) erleichtert.

In einer bevorzugten Ausführungsform trägt das Kabelgehäuse an einem Außenbereich entlang der Kanallängsrichtung mehrere voneinander beabstandete Fixierelemente zur lösbaren Fixierung einer Leitung. Hierdurch ermöglicht der Kabelkanal in einer zusätzlichen Funktion auch außerhalb seines Gehäuses eine strukturierte Positionierung und Verlegung leitungs- oder kabelartiger Gegenstände.

Die Leitung kann unterschiedlich ausgebildet sein. Beispielsweise ist sie nach Art eines Bandes oder Streifens mit mehreren flachen Leitungen ausgebildet, welche zur Daten- bzw. Signalübertragung dienen.

Insbesondere ist die Leitung als eine elektrische Schiene (z.B. Stromsammelschiene oder Erdungs-Sammelschiene) ausgebildet. Die an dem Kabelkanal fixierte Schiene wirkt ihrerseits aufgrund ihrer stabilen und ggf. starren Materialeigenschaften als eine Art mechanisch stabilisierendes Rückgrat für die Aufrechterhaltung der mechanischen Verbindung zwischen den Kabelgehäusen.

Um eine stabile mechanische Fixierung der Leitung an dem Kabelkanal zu unterstützen, sind am Kabelkanal vorzugsweise zwei in Kanallängsrichtung äquidistant verlaufende Fixierreihen vorgesehen, welche jeweils mehrere voneinander beabstandete Fixierelemente aufweisen.

Der erfindungsgemäße Kabelkanal wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische und abschnittsweise Darstellung eines erfindungsgemäßen Kabelkanals mit geöffneten Kabelgehäusen im Bereich eines aufgenommenen Kabels,
- Fig. 2: die Darstellung des Kabelkanals gemäß Fig. 1 mit geschlossenen Kabelgehäusen im Bereich des aufgenommenen Kabels,
- Fig. 3: eine perspektivische Teildarstellung der Kabelgehäuse gemäß Fig. 1, jedoch ohne aufgenommenes Kabel,
- Fig. 4: eine perspektivische Darstellung der in Fig. 3 nicht sichtbaren Unterseite der Kabelgehäuse, und
- Fig. 5: die perspektivische Darstellung der Unterseite gemäß Fig. 4 und einer daran fixierten Leitung.

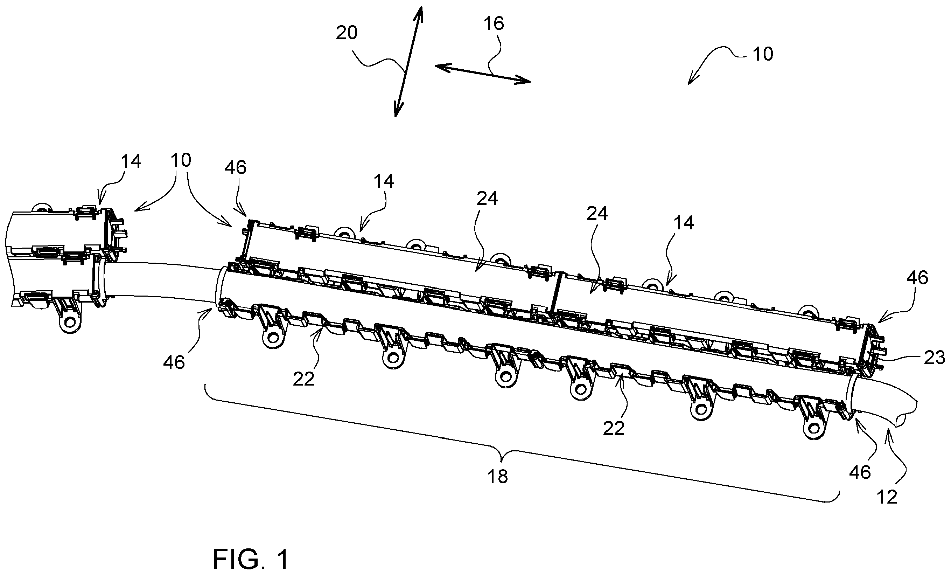

Fig. 1 zeigt einen Kabelkanal 10 zur Aufnahme eines Kabels 12, welches insbesondere als elektrisches Kabel mit einer oder mehreren elektrischen Leitungen ausgebildet ist. Der Kabelkanal 10 weist eine Kombination mehrerer (insbesondere identisch ausgebildeter) Kabelgehäuse 14 auf, welche das Kabel 12 entlang einer axialen Kabellängsrichtung bzw. Kanallängsrichtung 16 zumindest abschnittsweise - hier entlang eines Abschnittes 18 - aufnehmen. Zur Kombination und Aneinanderreihung mehrerer Kabelgehäuse 14 sind mehrere Verbindungsanschlüsse und korrespondierende Gegenanschlüsse an den Kabelgehäusen 14 vorgesehen.

Sämtliche Kabelgehäuse 14 sind zumindest funktionsmäßig und insbesondere auch hinsichtlich ihrer Dimensionierung und geometrischen Abmessungen identisch ausgebildet. Die Verbindungsanschlüsse und korrespondierenden Gegenanschlüsse sind deshalb vorzugsweise an jedem Kabelgehäuse 14 vorhanden.

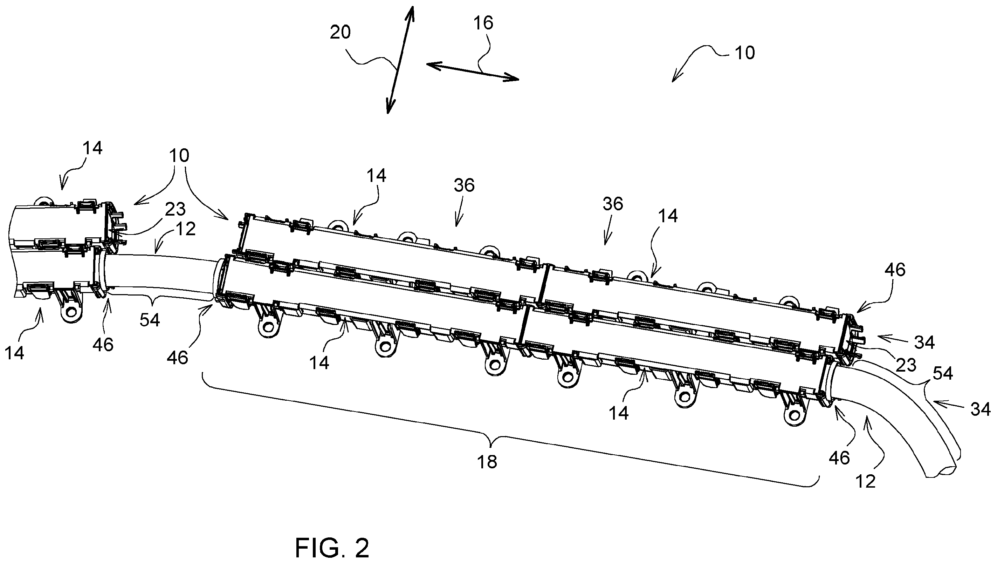

Die noch zu beschreibenden Verbindungsanschlüsse und korrespondierenden Gegenanschlüsse sind derart ausgebildet, dass eine Vielzahl von Kabelgehäusen 14 in Kanallängsrichtung 16 und/oder in einer Querrichtung 20 quer zur Kanallängsrichtung 16 aneinandergereiht werden können (Fig. 1, Fig. 2).

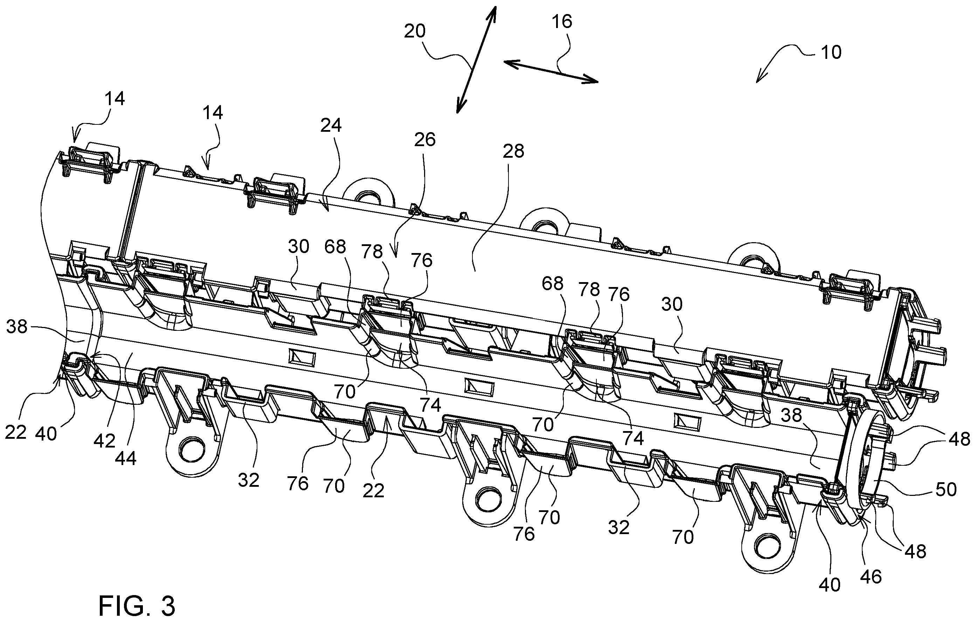

Bei einem Vergleich zwischen Fig. 1 und Fig. 3 ist erkennbar, dass das Kabelgehäuse 14 zwei miteinander zusammenwirkende Gehäuseschalen 22, 24 aufweist. Eine erste Gehäuseschale des Kabelgehäuses 14 ist als eine Aufnahmeschale 22 zur Aufnahme des Kabels 12 wirksam. Eine zweite Gehäuseschale wirkt dann als eine Deckschale 24 bzw. ein Deckel für einen wirksamen mechanischen Schutz des in die Aufnahmeschale 22 eingelegten Kabels 12. Die Deckschale 24 weist an ihrer Deckaußenseite 26 eine plane Außenfläche 28 auf. Hierdurch kann der gesamte Kabelkanal 10 eine im Wesentlichen plane Deckaußenseite 26 oder Außenfläche aufweisen, was dessen montagetechnische Handhabung erleichtert, z.B. seinen Einbau in ein Fahrzeug.

Nachdem der jeweilige Abschnitt des Kabels 12 in die Aufnahmeschale 22 eingelegt ist (Fig. 1), wird die Deckschale 24 mit der Aufnahmeschale 22 lösbar verbunden, um das Kabelgehäuse 14 zu vervollständigen und einen kanalartigen Hohlraum 23 für das Kabel 12 zu bilden (Fig. 2).

In Fig. 3 ist erkennbar, dass bei der Verbindung der beiden Schalen 22, 24 Montagenasen 30 der Deckschale 24 in Montageaussparungen 32 der Aufnahmeschale 22 eingreifen. Diese Montageelemente 30, 32 sind vorzugsweise derart ausgebildet, dass sie eine lösbare Verbindung (z.B. form- und/oder kraftschlüssig, Verrastung) der beiden Schalen 22, 24 unterstützen.

In Fig. 1 und Fig. 2 sind vier aneinandergereihte Kabelgehäuse 14 sichtbar. Dabei sind je zwei Kabelgehäuse 14 in Kanallängsrichtung 16 aneinandergereiht, so dass zwei parallele Längsreihen 34 gebildet sind. In Querrichtung 20 betrachtet sind ebenfalls je zwei Kabelgehäuse 14 aneinandergereiht, so dass zwei Querreihen 36 gebildet sind. Allerdings sind die Kabelgehäuse 14 der Querreihe 36 montagebedingt in Kanallängsrichtung 16 regelmäßig versetzt angeordnet.

In Fig. 3 ist erkennbar, dass die Aufnahmeschale 22 an ihrem einen kanallängsseitigen Endabschnitt 38 einen Verbindungsanschluss 40 aufweist, welcher mit einem korrespondierenden Gegenanschluss 42 eines weiteren Endabschnittes 44 der benachbarten Aufnahmeschale 22 lösbar verbunden ist. Die einzelnen Aufnahmeschalen 22 weisen jeweils sowohl den Verbindungsanschluss 40 als auch den korrespondierenden Gegenanschluss 42 auf. Auf diese Weise können beliebig viele Kabelgehäuse 14 in Kanallängsrichtung 16 aneinandergereiht werden.

Sofern an dem jeweiligen Endabschnitt 38, 44 der Aufnahmeschale 22 kein weiteres Kabelgehäuse 14 bzw. keine weitere Aufnahmeschale 22 angereiht wird, ist eine lösbare Verbindung des Verbindungsanschlusses 40 und/oder des korrespondierenden Gegenanschlusses 42 mit einem Abschlussteil 46 vorgesehen. Das Abschlussteil 46 trägt Flankiermittel in Form mehrerer Flankierstege 48 und ggf. zusätzlich eines Flankierringes 50.

Die Flankierstege 48 sind in einer quer zur Kanallängsrichtung 16 verlaufenden Umfangsrichtung 52 mit Abstand zueinander angeordnet und erstrecken sich im wesentlichen in Kanallängsrichtung 16. Der Flankierring 50 verläuft in Umfangsrichtung 52 und ist radial gesehen teilweise innerhalb und teilweise außerhalb der Flankierstege 48 angeordnet.

Die vorgenannten Flankiermittel 48, 50 flankieren das Kabel 12 außerhalb des Kabelgehäuses 14 neben dem Endabschnitt 38 oder Endabschnitt 44. Je nach Ausgestaltung können einzelne Flankiermittel 48, 50 das Kabel 12 mit oder ohne radialem Abstand flankieren. Sie tragen dazu bei, dass der von einem oder mehreren Kabelgehäusen 14 aufgenommene Abschnitt 18 des Kabels 12 in der gewünschten Soll-Position bleibt und folglich axial bzw. in Kanallängsrichtung 16 keine wesentlichen Relativbewegungen zwischen dem Abschnitt 18 des Kabels 12 und dem bzw. den aufnehmenden Kabelgehäuse(n) entstehen.

Zu diesem Zweck ist der Flankierring 50 beispielsweise als ein Kabelbinder ausgebildet, welcher solange festgezurrt wird, bis das Kabel 12 radial an einzelne Flankierstege 48 gepresst ist.

Die Abschlussteile 46 tragen außerdem dazu bei, dass das Kabel 12 außerhalb der aufgenommenen Abschnitte 18 freie Abschnitte 54 beibehält, welche flexible Biegeabschnitte ergeben für eine flexible Verlegung des gesamten Kabelkanals 10 an dem Einbaubereich, z.B. in einem Fahrzeug.

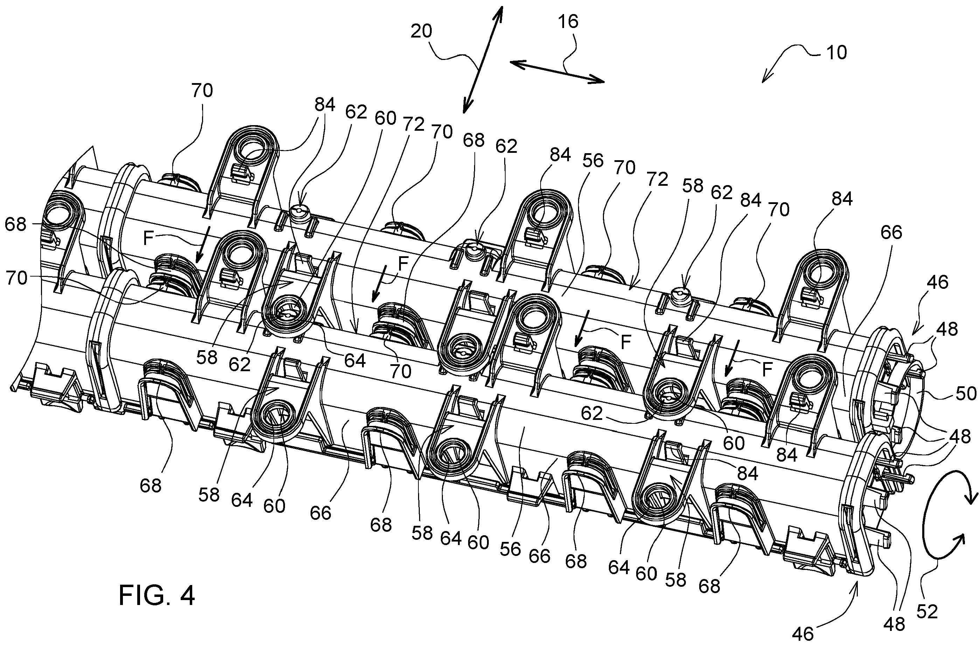

In Fig. 4 ist erkennbar, dass die Aufnahmeschale 22 an ihrer Außenseite 56 mehrere Verbindungsanschlüsse in Form flacher Anschlussausleger 58, welche sich im Wesentlichen in Querrichtung 20 erstrecken. Jeder Anschlussausleger 58 ist von einem Durchgangsloch 60 durchsetzt und korrespondiert mit einem Anschlusszapfen 62, welcher als ein korrespondierender Gegenanschluss an der Außenseite 56 der weiteren Aufnahmeschale 22 angeordnet ist.

Die Anschlussausleger 58 und die korrespondierenden Anschlusszapfen 62 bilden eine montagetechnisch einfache lösbare Verbindung zweier Kabelgehäuse 14 in Querrichtung 20. Eine Lochwand 64 des Durchgangsloches 60 und der korrespondierende Anschlusszapfen 62 liegen nach Art einer Formschlussverbindung aneinander an, welche durch eine in Querrichtung 20 wirksame Federkraft F aufrechterhalten wird. Die Federkraft F wird von mehreren an einer Außenflanke 66 der Aufnahmeschale 22 angeordneten Federblöcken 68 erzeugt. Im Montagezustand der in Querrichtung 20 aneinandergereihten Kabelgehäuse 14 beaufschlagt die Federkraft F der Federblöcke 68 jeweils einen Gegenblock 70. Die Gegenblöcke 70 sind an einer weiteren Außenflanke 72 der Aufnahmeschale 22 angeordnet. Werden die beiden in Querrichtung 20 aneinandergereihten Kabelgehäuse 14 mit einer im Vergleich zur Federkraft F der Federblöcke 68 größeren Gegenkraft in Querrichtung 20 gegeneinander gepresst, kann die lösbare Verbindung 58, 62 aufgelöst werden.

Wie in Fig. 3 zu erkennen ist, sind die Federblöcke 68 wie auch die Gegenblöcke 70 in der Aufnahmeschale 22 mit ausbrechbaren Wandungen 74, 76 verschlossen, die sich zur Bildung eines Kabelauslasses bzw. eines zwischen benachbarten Kabelgehäusen 14 verlaufenden geschützten Kabelübergangs von Hand entfernen lassen. Zusätzlich sind in der Deckschale 24 ausbrechbarere Abschnitte 78 vorgesehen, die sich zur Vergrößerung des betreffenden Kabelauslasses bzw. Kabeldurchgangs im Bereich des zugehörigen Federblocks 68 bzw. Gegenblocks 70 ebenfalls entfernen lassen.

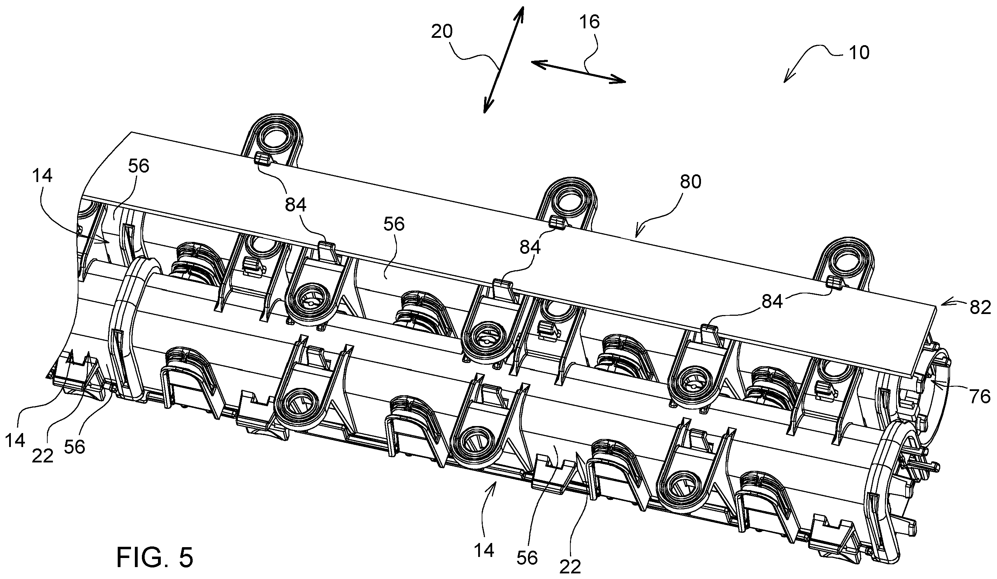

Fig. 5 zeigt die bereits in Fig. 4 erkennbare Unterseite des Kabelkanals 10 mit den Außenseiten 56 der Aufnahmeschalen 22. An dieser Unterseite ist eine Leitung 80 lösbar fixiert. Die Leitung 80 ist vorzugsweise als eine Stromschiene, insbesondere Erdungs-Sammelschiene, ausgebildet und trägt hierdurch zur mechanischen Stabilisierung des Kabelkanals 10 bei.

Für die lösbare Fixierung der Leitung 80 sind am Kabelgehäuse 14, genauer gesagt im Bereich der Außenseite 56 der Aufnahmeschale 22, zwei in Kanallängsrichtung 16 äquidistant verlaufende Fixierreihen 82 vorhanden. Jede Fixierreihe 82 weist mehrere in Kanallängsrichtung 16 voneinander beabstandete Fixierelemente 84 auf. Diese sind beispielsweise nach Art von Raststegen ausgebildet, welche in Querrichtung 20 federnd biegsam sein können.

## Patentansprüche

1. Kabelkanal (10) zur Aufnahme mindestens eines Kabels (12), wobei der Kabelkanal (10) eine Kombination mehrerer kanalartiger Kabelgehäuse (14) aufweist, und das Kabelgehäuse (14) mindestens einen Verbindungsanschluss (40, 58) aufweist, welcher mit einem korrespondierenden Gegenanschluss (42, 62) eines weiteren Kabelgehäuses (14) lösbar verbunden ist zur Aneinanderreihung zweier Kabelgehäuse (14), wobei der Verbindungsanschluss (58) des Kabelgehäuses (14) und der korrespondierende Gegenanschluss (62) des weiteren Kabelgehäuses (14) lösbar verbunden sind derart, dass zwei Kabelgehäuse (14) quer zur Kanallängsrichtung (16) aneinandergereiht sind, **dadurch gekennzeichnet, dass** die lösbare Verbindung durch eine quer zur Kanallängsrichtung (16) zwischen den beiden Kabelgehäusen (14) wirksame Federkraft (F) aufrechterhalten wird.

2. Kabelkanal nach Anspruch 1, **dadurch gekennzeichnet, dass** das Kabelgehäuse (14) sowohl den Verbindungsanschluss (40, 58) als auch den korrespondierenden Gegenanschluss (42, 62) aufweist.

3. Kabelkanal nach Anspruch 1 oder 2, **dadurch gekennzeichnet, dass** der Verbindungsanschluss (40) des Kabelgehäuses (14) und der korrespondierende Gegenanschluss (42) des weiteren Kabelgehäuses (14) lösbar verbunden sind derart, dass zwei Kabelgehäuse (14) in Kanallängsrichtung (16) aneinandergereiht sind.

4. Kabelkanal nach einem der vorhergehenden Ansprüche,
**dadurch gekennzeichnet, dass** der Verbindungsanschluss (40) und/oder der korrespondierende Gegenanschluss (42) des Kabelgehäuses (14) jeweils mit einem Abschlussteil (46) lösbar verbunden ist, wobei das Abschlussteil (46) Flankiermittel (48, 50) trägt, welche sich zur radialen Flankierung eines aufgenommenen Kabels (12) in Kanallängsrichtung (16) und/oder in einer quer zur Kanallängsrichtung (16) verlaufenden Umfangsrichtung (52) erstrecken.

5. Kabelkanal nach einem der vorhergehenden Ansprüche,
**dadurch gekennzeichnet, dass** das Kabelgehäuse (14) zwei miteinander zusammenwirkende Gehäuseschalen (22, 24) aufweist, welche miteinander lösbar verbunden sind und im verbundenen Zustand einen kanalartigen Hohlraum (23) für das Kabel (12) begrenzen.

6. Kabelkanal nach Anspruch 5, **dadurch gekennzeichnet, dass** eine als Deckel wirksame Gehäuseschale (24) eine plane Außenfläche (28) aufweist.

7. Kabelkanal nach einem der vorhergehenden Ansprüche,
**dadurch gekennzeichnet, dass** das Kabelgehäuse (14) an einem Außenbereich (56) entlang der Kanallängsrichtung (16) mehrere voneinander beabstandete Fixierelemente (78) trägt zur lösbaren Fixierung einer Leitung (74).

8. Kabelkanal nach Anspruch 7, **dadurch gekennzeichnet, dass** das Kabelgehäuse (14) zwei in Kanallängsrichtung (16) äquidistant verlaufende Fixierreihen (76) mit jeweils mehreren voneinander beabstandeten Fixierelementen (78) aufweist.

## Claims

1. Cable channel (10) for receiving at least one cable (12), wherein the cable channel (10) has a combination of a plurality of channel-like cable housings (14), and the cable housing (14) has at least one connector (40, 58), which is releasably connected to a corresponding mating connector (42, 62) of a further cable housing (14) for the purpose of arranging two cable housings (14) together, wherein the connector (58) of the cable housing (14) and the corresponding mating connector (62) of the further cable housing (14) are releasably connected in such a way that two cable housings (14) are arranged together transversely to the channel longitudinal direction (16), **characterized in that** the releasable connection is maintained as a result of a spring force (F) acting between the two cable housings (14) transversely to the channel longitudinal direction (16).

2. Cable channel according to Claim 1, **characterized in that** the cable housing (14) has both the connector (40, 58) and the corresponding mating connector (42, 62).

3. Cable channel according to Claim 1 or 2, **characterized in that** the connector (40) of the cable housing (14) and the corresponding mating connector (42) of the further cable housing (14) are releasably connected in such a way that two cable housings (14) are arranged together in the channel longitudinal direction (16).

4. Cable channel according to one of the preceding claims, **characterized in that** the connector (40) and/or the corresponding mating connector (42) of the cable housing (14) is releasably connected in each case to a terminating part (46), wherein the terminating part (46) supports flanking means (48, 50), which, for radially flanking a received cable (12), extend in the channel longitudinal direction (16) and/or in a circumferential direction (52) extending transversely to the channel longitudinal direction (16).

5. Cable channel according to one of the preceding claims, **characterized in that** the cable housing (14) has two mutually cooperating housing shells (22, 24), which are releasably connected to one another and, in the connected state, delimit a channel-like cavity (23) for the cable (12).

6. Cable channel according to Claim 5, **characterized in that** a housing shell (24) acting as a cover has a planar outer surface (28).

7. Cable channel according to one of the preceding claims, **characterized in that** the cable housing (14), on an outer region (56) along the channel longitudinal direction (16), supports a plurality of mutually spaced securing elements (78) for releasably securing a line (74).

8. Cable channel according to Claim 7, **characterized in that** the cable housing (14) has two securing rows (76), which extend equidistantly in the channel longitudinal direction (16) and have in each case a plurality of mutually spaced securing elements (78).

## Revendications

1. Canal de câble (10) destiné à recevoir au moins un câble (12), le canal de câble (10) présentant une combinaison de plusieurs boîtiers de câble (14) de type conduit, et le boîtier de câble (14) présentant au moins un raccord de liaison (40, 58) qui est relié de manière amovible à un raccord antagoniste correspondant (42, 62) d'un autre boîtier de câble (14) pour l'alignement de deux boîtiers de câble (14), le raccord de liaison (58) du boîtier de câble (14) et le raccord antagoniste correspondant (62) de l'autre boîtier de câble (14) étant reliés de manière amovible de telle sorte que deux boîtiers de câble (14) sont alignés transversalement à la direction longitudinale de canal (16), **caractérisé en ce que** la liaison amovible est maintenue par une force de ressort (F) agissant transversalement à la direction longitudinale de canal (16) entre les deux boîtiers de câble (14).

2. Canal de câble selon la revendication 1, **caractérisé en ce que** le boîtier de câble (14) présente aussi bien le raccord de liaison (40, 58) que le raccord antagoniste correspondant (42, 62).

3. Canal de câble selon la revendication 1 ou 2, **caractérisé en ce que** le raccord de liaison (40) du boîtier de câble (14) et le raccord antagoniste correspondant (42) de l'autre boîtier de câble (14) sont reliés de manière amovible de telle sorte que deux boîtiers de câble (14) sont alignés dans la direction longitudinale de canal (16).

4. Canal de câble selon l'une quelconque des revendications précédentes, **caractérisé en ce que** le raccord de liaison (40) et/ou le raccord antagoniste correspondant (42) du boîtier de câble (14) est relié de manière amovible à une pièce de terminaison (46), la pièce de terminaison (46) portant des moyens de flanc (48, 50), qui s'étendent dans la direction longitudinale de canal (16) et/ou dans une direction périphérique (52) s'étendant transversalement à la direction longitudinale de canal (16) pour flanquer radialement un câble reçu (12).

5. Canal de câble selon l'une quelconque des revendications précédentes, **caractérisé en ce que** le boîtier de câble (14) présente deux coques de boîtier (22, 24) coopérant l'une avec l'autre, qui sont reliées l'une à l'autre de manière amovible et qui, à l'état relié, délimitent une cavité (23) de type canal pour le câble (12).

6. Canal de câble selon la revendication 5, **caractérisé en ce qu'**une coque de boîtier (24) servant de couvercle présente une surface extérieure plane (28).

7. Canal de câble selon l'une quelconque des revendications précédentes, **caractérisé en ce que** le boîtier de câble (14) porte, sur une zone extérieure (56) le long de la direction longitudinale de canal (16), plusieurs éléments de fixation (78) espacés les uns des autres pour la fixation amovible d'une conduite (74).

8. Canal de câble selon la revendication 7, **caractérisé en ce que** le boîtier de câble (14) présente deux rangées de fixation (76) s'étendant de manière équidistante dans la direction longitudinale de canal (16), qui présentent chacune plusieurs éléments de fixation (78) espacés les uns des autres.
